# EUROPEAN PATENT APPLICATION

(11) **EP 1 640 627 A1**
(43) Date of publication of application: **29.03.2006**
(21) Application number: 05255841.8
(22) Date of filing: 21.09.2005
(51) Int. Cl.: F16C 33/66, F01D 25/18, F16D 3/06, F16J 15/34, F16N 7/36, F16N 9/02

(54) **Lubricant distribution weir for lubricating rotating machine elements**

(30) Priority: 23.09.2004 US 948005
(71) Applicant: GENERAL ELECTRIC COMPANY, Schenectady, NY 12345 (US)
(72) Inventor: Wilton, Stephen Anthony, Cincinnati Ohio 45246 (US); Fang, Ning, West Chester Ohio 45069 (US); Themudo, Ramon, Cincinnati Ohio 45423 (US); Whitford, David Scott, West Chester Ohio 45069 (US); Kinnard, Ray Harris, Port Thomas Kentucky 41075 (US); Fisher, Kenneth Lee, Lockland Ohio 45215 (US)
(74) Representative: Goode, Ian Roy

(57) **Abstract**

A device (14) and method for uniformly providing lubricant to rotating machine parts is provided. The device (14) comprises an axially mounted rotating circumferential lubricant reservoir (20) with a weir (22) comprising one side of the lubricant reservoir (20). The reservoir (20) and weir (22) are disposed at uniform radius and circumferentially about an axis of rotation causing lubricant added to the reservoir (20) to flow uniformly over the weir 22 about the circumference of the weir (22) when the device (14) is in high speed rotational motion. Because of the uniform flow of lubricant over the top of the weir (28) around the circumference of the weir (22), lubricant can be directed to machine parts requiring lubrication in a uniform manner around the circumference of the moving device (14).

## Description

This application relates to tribology in rotating machinery.

When a mass experiences circular motion about an axis of rotation, the mass will fly off in a tangent to the circumference of rotation unless it is constrained to move in circular motion by a centripetal force. An example of this is a mass on the end of a string in circular motion about an axis of rotation. The string provides a centripetal force on the mass constantly accelerating it radially, and constraining it to move in a circle. If the string is lengthened without changing the linear speed of the mass, the force provided by the string is reduced, but the circumference of rotation is increased, and the mass stays in circular motion about the axis of rotation. From another aspect, if the angular speed of the mass is held constant, the centripetal acceleration of the mass increases as the string is lengthened, and the force provided by the string is greater.

The fundamental physics of this phenomenon is used for many different purposes to make many different devices from slings to laboratory centrifuges to rotating machinery. In the case of rotating machinery, the phenomenon can be used for pumping fluids by creating pressure on a fluid mass from the constrained motion of the fluid as it rotates in a container about an axis of rotation. The pressure is developed by the action of the centripetal force provided by the container on the fluid as it rotates. In rotating machinery, the force developed by the rotation on the fluid can be many thousand times Earth's gravitational force for common machine part sizes and speeds of rotation. A good example is in the case of turbo-machinery where common rotation speeds reach several thousand revolutions per minute, and the force can reach 10,000 Earth gravities or more depending on the geometry and speed of the part.

Since the machine parts are solid pieces, in most applications in rotating speed of rotation is constant, following the description above, the relative centripetal force on a mass increases linearly as it moves further away from the axis of rotation. Main shaft bearings in high speed turbo-machinery use the phenomenon to develop high pressures in a lubricant reservoir, and the pressures on fluids in the reservoir increase as the reservoir is moved further from the axis of rotation. This situation is often referred to as a centrifugal field referring to the apparent force radiating outward about the axis of rotation due to the inertial proclivity of matter to appear to be in a force field radiating radially from the axis of rotation outward, but actually caused by the centripetal constraints holding the machine parts, including the lubricant reservoir, together.

Often high speed turbo machinery uses the lubricant pressures developed to feed lubricant to various machine parts needing lubrication. In particular, main shaft bearings in turbo-machinery such as aircraft engines are often lubricated through radial holes and axial grooves machined in the inner bearing rings. This procedure is called under race lubrication wherein the lubricant flows from the inside bearing race, or ring, closest to the axis of rotation. Oil routed inside the inner bearing ring is forced through outward radiating holes or ports into the raceways and rolling elements of the bearing by the inertial effects of rotation that generate pressure as described above.

In a typical application axially aligned grooves are machined into the inner ring of a bearing. These axial grooves lead from an oil reservoir circumferentially machined into the inner ring to a radial port machined into the inner ring leading to the raceway and rolling elements of the bearing. The grooves intersect the side of the oil reservoir. Oil flows from the reservoir and is controlled by the number of axial oil grooves, each groove's relative radial position with respect to the reservoir, and the flow rate of each groove leading to its port or ports. Under high speed rotation the inlet geometry of each groove is critical to the film thickness of the lubricant passing through the groove and controls the flow rate into each groove.

Because of this situation, the machining tolerances of each groove around the circumference of the oil reservoir is important if one is to control the flow of lubricant to each surface to be lubricated through the groove and its tribologically associated port or ports. Using existing machining technology, it is costly and difficult to exactly control the geometry of each groove since each groove and its intersection with the lubricant reservoir must be individually machined to exacting tolerance.

Machining difficulty and cost become even more significant when the number of grooves increases which is common in applications such as aircraft engine lubrication where the lubrication is accomplished using the process described above and is called under-race lubrication. In this process oil is fed, for example, to raceway and bearing surfaces rotating around an axis of rotation from the axis of rotation side of the bearing ring.

If one wants to uniformly distribute lubricant around the circumference of the lubricant reservoir, the grooves around the circumference must all have the same inlet geometry from the lubricant reservoir. The machining difficulty and cost become unwieldy. A design with even flow rate control, minimized machining difficulty, and minimized cost is needed.

According to the present invention, there is provided a device for uniformly providing lubricant to machine parts. It comprises an axially mounted rotating circumferential lubricant reservoir, the lubricant reservoir having an axis of rotation and supplying lubricant to the machine parts to be lubricated, and an axially mounted rotating circumferential weir that comprises one side of the reservoir for causing the lubricant to flow uniformly over the top of the weir around the circumference of the top of the weir.

The invention also provides a device for lubricating axially mounted rotating aircraft engine parts when rotating. It comprises a circumferential lubricant reservoir for supplying lubricant to the parts to be lubricated having a first side and a second side, the first side having a deeper wall height than the second side, and a top side disposed closer to the axis of rotation than a bottom side that is disposed further from the axis of rotation. The top side is substantially open and the bottom side is closed to allow the reservoir to retain a lubricant when rotating; and a circumferential weir further comprising the second side of the reservoir allows lubricant supplied to the reservoir to flow uniformly over the top of the weir around the circumference of the weir when rotating without the lubricant escaping through the first side.

A method for making a device is provided that uses axially mounted rotating parts for uniformly providing lubricant around the circumference of the device to machine parts. It comprises providing an axial bore for axially mounting the device, machining a circumferential lubricant reservoir for providing lubricant to the parts, machining a circumferential weir for uniformly delivering lubricant around the circumferential arc of the weir to the parts, machining grooves parallel to the axis of rotation for directing lubricant away from the weir to the parts, and machining ports leading from the grooves to a surface to be lubricated for delivering lubricant to the surface to be lubricated.

A method for lubricating axially mounted rotating aircraft engine parts when rotating is described. The method comprises storing lubricant in at least one circumferential lubricant reservoir, filling the reservoir until the lubricant passes over the top of at least one circumferential weir that is one side of the lubricant reservoir, and distributing the lubricant uniformly over the top of the circumferential weir.

Embodiments of the invention will now be described, by way of example, with reference to the accompanying drawings, in which:
FIG. 1 is a prior art aircraft engine main shaft roller bearing;
FIG. 2 is a prior art cross section of a roller bearing mounted on a shaft;
FIG. 3 is a cross section of a shaft and bearing employing the invention;
FIG. 4 is a cut-away drawing of an aircraft engine main shaft roller bearing inner ring with a roller employing the invention;
FIG. 5 is cross section of a bearing with a weir in a shaft;
FIG. 6 is a cut away of a shaft spline coupling;
FIG. 7 is a splined shaft with splines and weir on the shaft;
FIG. 8 is a carbon face seal; and
FIG. 9 a carbon face seal with the moving element a part of the rotating shaft.

As used herein, a lubricant is a fluid that is used to cool or reduce friction or to both cool and reduce friction in moving parts. Accordingly, lubricating or performing lubrication refers to the act of cooling or reducing friction or to the act of cooling and reducing friction in moving parts.

A circumferential lubricant reservoir is filled with lubricant by means external to the reservoir. For example, in one embodiment the reservoir can be filled from a series of scoops mounted on a rotating element that move lubricant from a lubricant sump into the reservoir. The reservoir can be machined into or mounted on a rotating element of machinery but is disposed at a constant radius and in a circumferential manner around the axis of rotation of the rotating element. That is, the reservoir is disposed about the axis of rotation in a circular arc centered on the axis of rotation of the rotating machine element. When rotating, lubricant in the reservoir is subjected to the centripetal forces of rotation. For typical speeds of rotation, which can be in excess of 10,000 revolutions per minute (rpm) in turbo-machinery, the acceleration experienced by the lubricant in the reservoir can be thousands of times normal Earth gravity. Because of this, pressure is developed on the lubricant. Due to the rotational motion and its associated centripetal force a substantially uniform lubricant level is established in the reservoir. In this sense, up, over, or top refer to dispositions of material relatively closer to the axis of rotation than down, under, or bottom which refer to dispositions of material relatively further from the axis of rotation.

As used herein, the circumference, full arc of circumference, or full circumference is considered to span the arc of the full circumference of a 360° circle. A partial arc of circumference, partial arc, or partial circumference is some part of the circumference of a circle that spans an arc of less than 360°.

A circumferential dam or weir is used that allows uniform lubricant spilling around the circumference of the weir once the reservoir is filled to weir height. The weir is disposed circumferentially about the axis of rotation as is the reservoir. That is, the weir is disposed about the axis in a circular arc centered on the axis of rotation of the rotating machine element. The weir is machined to exacting radius tolerances and comprises a side wall of the reservoir. The radius from the axis of rotation to the innermost weir surface, called the top of the weir, is held to tolerance of less than about ± 0.001 inch (± 0.025mm). This ensures the uniform spilling of the lubricant over the top of the weir as it uniformly fills the reservoir and exceeds weir height under the action of the centripetal acceleration of the reservoir and weir as they undergo rotation about the axis of rotation.

Because of the rotation of the machinery about an axis, a centrifugal field is formed. A centrifugal field refers to the apparent force radiating outward about the axis of rotation due to the inertial proclivity of matter to act as if it is in a force field radiating radially from the axis of rotation outward when undergoing rotation but actually caused by the centripetal constraints holding the machine parts, including the lubricant reservoir, together.

Once the lubricant has spilled over the weir, conduits can be used to collect the uniformly distributed lubricant and direct it to where lubrication is needed. These conduits can take a variety of forms comprising tubes, ports, channels, grooves or other lubricant conveyances.

In one embodiment the conduits can be reservoirs themselves and can in turn provide lubricant to other conduits all designed to move lubricant to a desired location.

In operation the invention can be used to uniformly distribute and convey other fluids as well as lubricants. Developing high pressure on the fluid, the rotating reservoir can be considered a fluid pump, and the weir uniformly delivers the fluid about a circumferential arc.

The invention is useful in many kinds of rotating machinery and is especially useful in turbo-machinery such as aircraft engines. It can be used for lubricating bearings, gears, carbon seals, splines and a variety of other elements in aircraft engines.

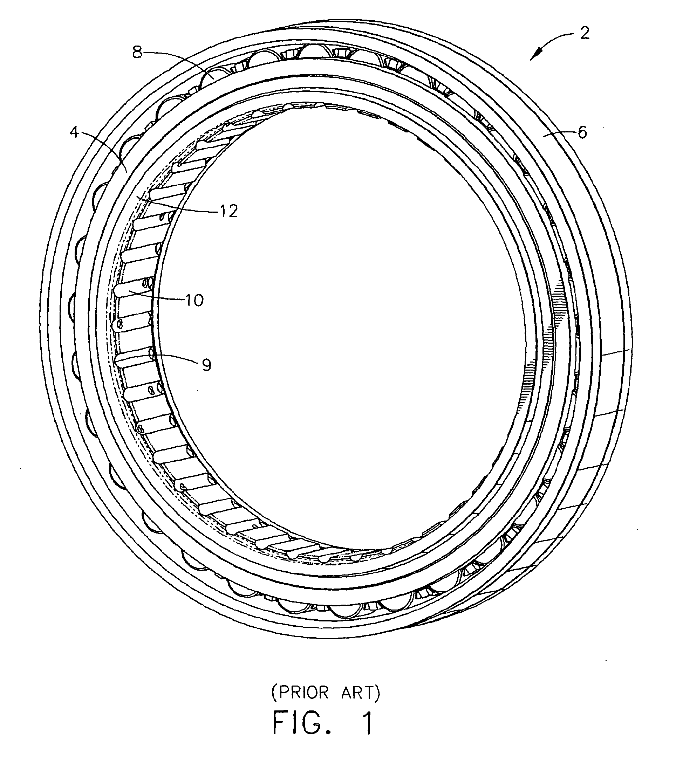

Referring to the drawings, FIG.1 is prior art of an aircraft engine main shaft roller bearing 2. The roller bearing of FIG. 1 comprises an inner ring 4, an outer ring 6, and rollers 8. In this example the axial lubricant grooves 10 intersect the oil reservoir 12 on the inner ring 4 of the bearing giving rise to oil distribution problems associated with the accuracy of the geometry of the inlets 9 to the axial lubricant grooves 10.

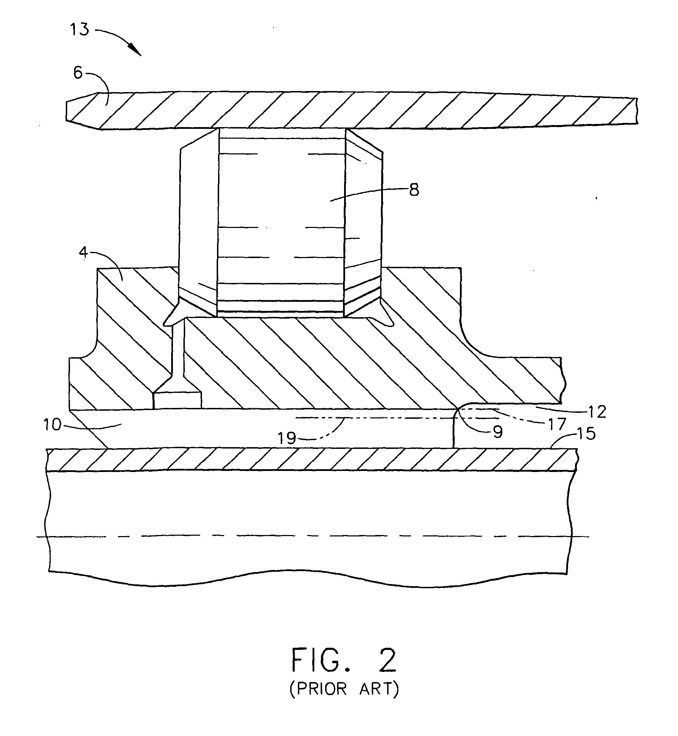

FIG. 2 is a prior art partial cross section of the roller bearing 13 of FIG. 1 mounted on a shaft 15. In FIG. 2 the space between a first broken line 17 and a second broken line 19 shows the critical limitation of the prior art. The limitation is that the depth of the lubricant in the reservoir 12 must reach the level of the first broken line 17 before it spills over into the lubricant groove 10. Because in making the inner ring 4 each groove inlet 9 must be machined to the same radius from the shaft center, or axis of rotation, to supply lubricant uniformly around the circumference of the bearing 2, the potential error in machining each groove, shown by the space between the first broken line 17 and the second broken line 19, can cause non-uniform lubricant distribution around the circumference of the inner bearing ring 4.

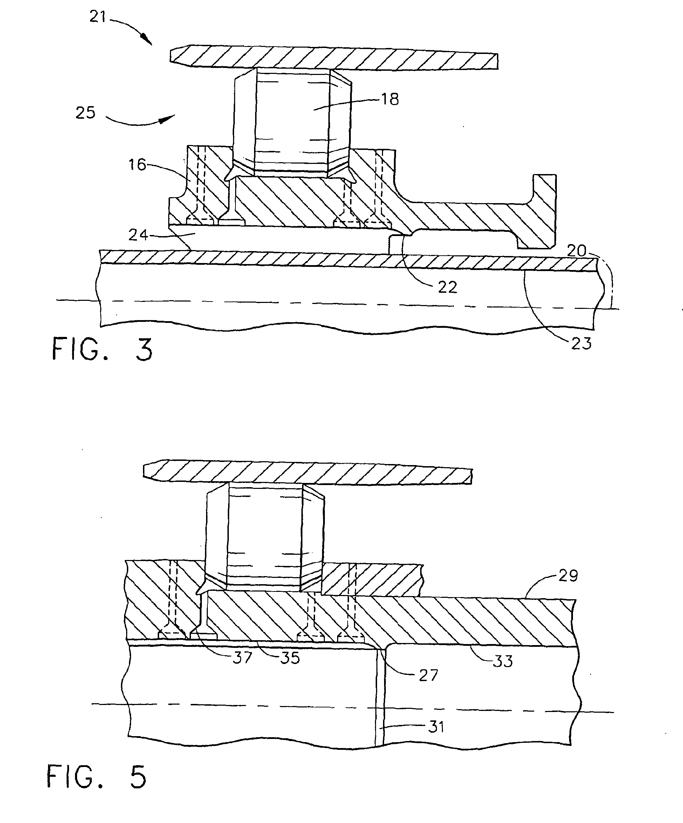

FIG. 3 shows a cross section of a shaft and bearing 21 employing the invention. The bearing assembly 25 is mounted on the shaft 23. A weir 22 is created that can be machined in a single machining operation around the circumference of the inner race 16 to tolerance. With the invention variations among lubricant grooves 24 are no longer important as the radial distance of the weir 22 from the axis of rotation 20 determines lubricant distribution over the weir 22, and so long as the weir 22 is machined uniformly to tolerance around the circumference of the bearing ring 16, lubricant will flow uniformly over the top of the weir 22 distributing lubricant uniformly around the circumference of the weir 22 to the lubricant grooves 24.

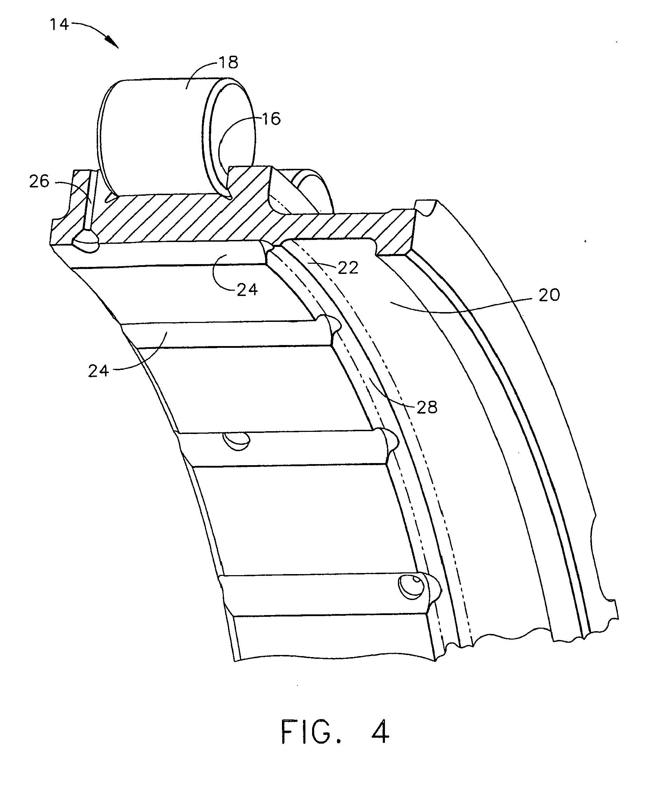

FIG. 4 is a cut-away drawing of an aircraft engine main shaft roller bearing inner ring 14 with a roller 18 which employs the invention. The inner ring assembly 14 comprises a race 16 for the rollers 18 to roll on, a circumferential lubricant reservoir 20 for storing lubricant, a circumferential weir 22 for uniformly distributing the lubricant circumferentially, axial lubricant grooves 24 for conveying the distributed lubricant away from the weir 22 and radial ports 26 for radially conveying the lubricant from the grooves to the site needing lubrication.

Operationally, the lubrication functions of the inner ring assembly 14 are performed when rotating at a speed sufficient to keep lubricant uniformly level in the lubricant reservoir 20. In this embodiment lubricant is supplied to the lubricant reservoir 20 using means external to the reservoir 20. The rate of delivery of lubricant to the reservoir 20 and the consequent level of the lubricant in the reservoir 20 is controlled by these external means. In this way the amount of lubricant delivered to the bearing assembly can be controlled by the rate of addition to the reservoir 20.

As lubricant is added to the reservoir 20, it reaches the top of the weir 28 and spills over the top of the weir 28 uniformly around the circumference of the weir 22 into the grooves 24 which lead to the radial ports 26. One advantage of the weir 22 is that the weir 22 can be machined into the part in a single machining operation. Tight radial tolerances must be maintained so that the top of the weir is evenly spaced from the axis of rotation around its circumference. Typically, radial tolerances from the axis of rotation to the top of the weir 28 are from about ± 0.0005 inch (± 0.013 mm) to about ± 0.001 inch (± 0.025 mm). This tight tolerance on the top of the weir 28 is designed to ensure the uniform distribution of the lubricant over the top of the weir 28 around the circumference of the weir 22. The tolerance on the radius of the top of the weir 28 as machined ensures that the lubricant film thickness passing over the weir will be substantially uniform around the circumferential arc of the top of the weir 28. The manufacturing procedure for the weir 22 is much simpler, less time consuming, and less costly than the prior art method of indexing the periphery of the inner ring 4 of FIG. 2 and accurately machining its axial lubricant groove inlets 9 to equal height.

Because of the high values of the centripetal acceleration on the inner ring assembly 14, the lubricant passes over the top of the weir 28 in a film of varying thickness depending on the rate of addition of lubricant to the reservoir 20. Since substantially the same amount of lubricant passes over the top of the weir 28 at every point on its circumference and because of the high speed of rotation of the inner ring assembly 14, the amount of lubricant supplied to the axial grooves 24, is substantially the same from groove to groove permitting lubricant to pass through the radial ports 26 in the same relative amount from port 26 to port 26 and ensuring that the bearing race 16 and rollers 18 are uniformly lubricated around the circumference of the bearing. Lubricant poor spots with attendant non-uniform wear are substantially eliminated. In this way the invention can extend bearing life owing to the improvement in bearing tribology.

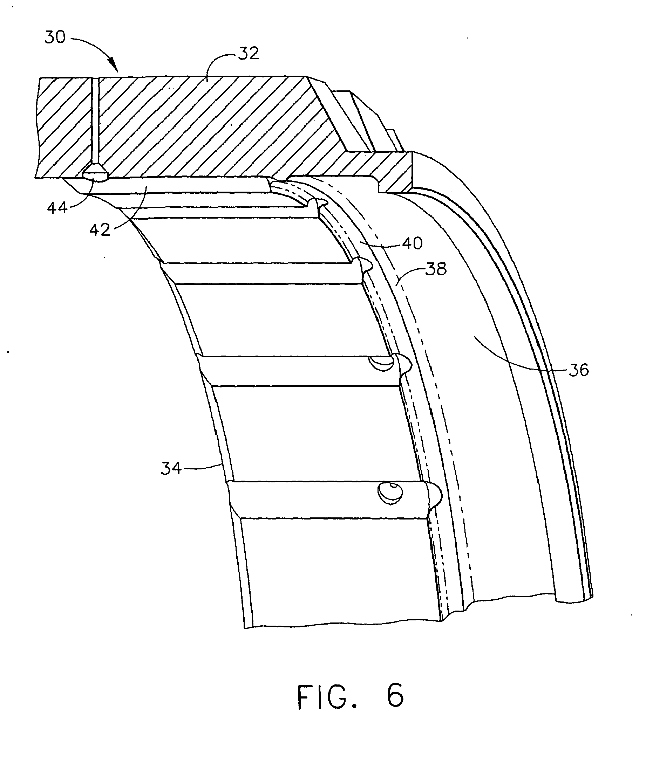

FIG. 5 is another embodiment showing a weir 27 machined directly into a rotatable shaft 29. In this embodiment the lubricant is supplied to the inside of the shaft 29 with the weir 27 machined about the interior circumference of the shaft 29 so that the lubricant passes over the top of the weir 31 from the reservoir 33 then flows uniformly down the axial grooves 35 to radial ports 37 directing the lubricant to where it is needed.

FIG. 6 is another embodiment showing a cut away of the inside of a shaft spline coupling 30 employing the invention. Shaft spline couplings 30 use axially aligned external splines 32 disposed about the outside circumference of a shaft or ring 34 which engage similar splines disposed about the inner circumference of another shaft or ring, not shown, in sleeve-like fashion. These couplings are often lubricated when they have an axial misalignment or radial play or there is known movement between the splines 32. When such movement exists, they are often called working splines 32. Lubrication of these working splines 32 can proceed by creating a lubricant reservoir 36 around the shaft with a weir 38 and using suitable conduits, including but not limited to grooves 42 and/or ports 44, to deliver lubricant uniformly to the working splines 32.

FIG. 6 comprises spline teeth 32 and a spline ring 34 employing the invention. Spline assemblies can be lubricated using a procedure similar to bearings wherein lubricant, as in the reservoir 20 of FIG. 4, can be pressurized by mounting or machining a lubricant reservoir 36 into a rotating part, very precisely machining a weir 38 as a side of the lubricant reservoir 36, allowing the lubricant to flow over the top of the weir 40 to uniformly distribute it around the circumference of the weir 38 and conveying the uniformly distributed lubricant to the wear surfaces of the splines 32 using a conduit system which can employ grooves 42, ports 44, or other conveyances to move lubricant to satisfy tribological requirements.

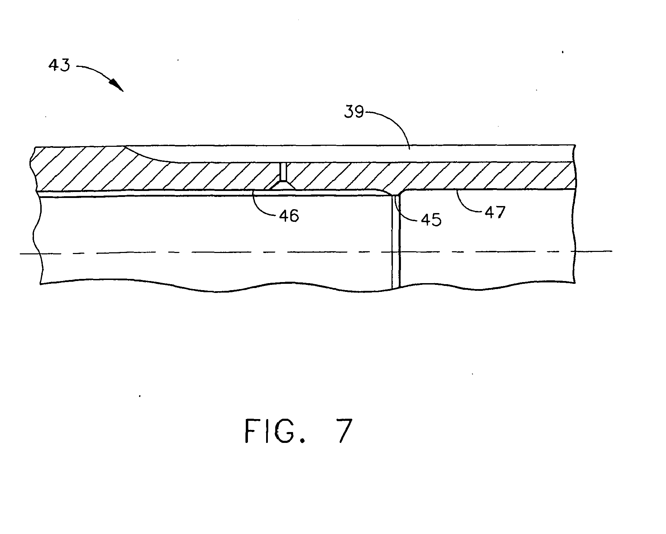

FIG. 7 is an embodiment showing a splined shaft 43 with splines 39 machined directly into the shaft 43 on the outside of the shaft and with axial grooves 46 on the inside of the shaft. In the embodiment shown the weir 45 is machined into the inner circumference of the hollow shaft 43 allowing lubricant to be delivered uniformly to the axial grooves 46 about the inner circumference of the hollow shaft 43 from an oil reservoir 47.

In another embodiment gears and gear rings can be employed to practice the invention. The lubricant reservoir and weir is integrated with a gear ring or shaft having gear teeth and suitable lubricant conduits leading to contact surfaces. The rotation of the gear ring about its axis of rotation causes lubricant to flow as described above and by suitably locating lubricating ports lubricant can be delivered to the specific sites needing lubrication.

In some embodiments the lubricant can be sprayed onto contact surfaces owing to the high pressures developed under high speed rotation. With the weir delivering lubricant uniformly about a circumference, using this method of lubricating the surfaces adds flexibility to the paths chosen for the lubricant conduits.

In another embodiment carbon seals can be lubricated using the invention. Carbon seals have a rotating member, typically metal, and a stationary member, typically graphite. When forming a contact plane perpendicular to the shaft, they are called face seals; when forming a contact plane parallel to the shaft, they are called circumferential seals. The sealing area is where the two parts contact and is typically lubricated with oil when at high rubbing speeds. Both face seals and circumferential seals use oil as a lubricant to cool the rotating member, called the seal runner. In this embodiment, lubricant is uniformly removed from a reservoir by uniform flow over a precisely machined top of the weir as described above and is channeled along the seal runner by suitable conduits.

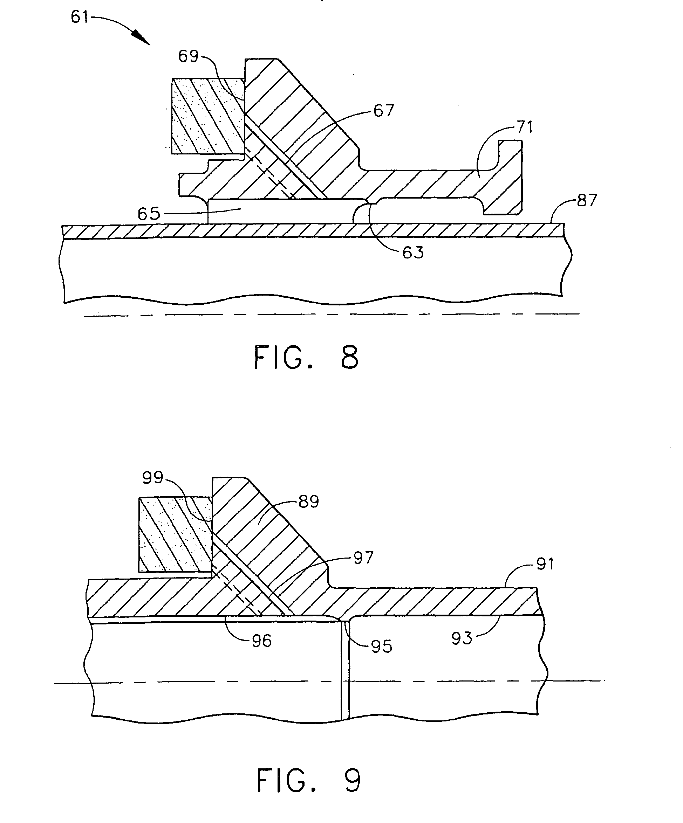

FIG. 8 is a carbon face seal 61. In this embodiment lubricant is uniformly delivered around the circumference of a weir 63 and channeled through a conduit system of grooves 65 and ports 67 to a seal runner sealing surface 69 disposed perpendicular to the axis of rotation of the rotating member 71. In the embodiment shown, the lubricant groove separators are mounted directly in contact with the surface of the shaft 87 constraining the oil to follow the conduit path of grooves 65 and ports 67.

FIG. 9 is an embodiment wherein the carbon face seal moving element 89 is actually a part of the rotating shaft 91. The shaft 91 is hollow with the lubricant reservoir 93 and the weir 95 built into the inside of the shaft with axial grooves 96 leading to a system of conduits 97 guiding the lubricant to the sealing surface 99.

In another embodiment the invention can be used to uniformly distribute oil over partial arcs of circumference. This is achieved by blocking lubricant flow over certain spans of the top of the weir, creating a partial arc of lubricant distribution. While often accomplished by simply adding impervious material over the top of the weir, any method of increasing the effective height of the weir over a partial arc may be used to prevent flow over a partial arc of the weir. Often this is done in a symmetric manner around the circumference of the weir to preserve balance in the rotating element undergoing high speed rotation. However the variation in weir height is accomplished, lubricant is delivered over only the lowest open portions of the weir. One advantage of this design is that lubricant can be uniformly distributed to smaller components of an assembly that do not require uniform circumferential lubricating around a full arc of circumference but still do require careful metering of lubricant and uniform distribution over a partial circumference.

In another embodiment, a plurality of lubricant reservoirs and a plurality of weirs can be used to provide various lubricants to a plurality of locations in a rotating assembly. A series of full circumferential lubricant reservoirs and weirs is provided along a shaft or other machine assembly together with appropriate flow conduits for removing the lubricant from the downstream side of the weirs.

From another aspect, a series of partial arc reservoirs with partial arc weirs can be used to provide a plurality of lubricants metered and evenly distributed over the partial arc weirs. Suitable conduits can be used to distribute each lubricant as needed.

In another embodiment the pressure on the lubricant supplied over the top of the weir can be varied simply by varying the distance of the conduits from the axis of rotation. Under constant angular rotational speed the centripetal force on the lubricant increases, increasing the effective fluid pressure, as the conduit path departs the axis of rotation. A plurality of lubricant reservoirs, weirs, and conduits can be used to create a plurality of fluid pressures on a plurality of fluids. Such a plurality of pressures can be useful in a number of applications. For example, a plurality of reservoirs can be used when there is a large difference in the size of the objects being lubricated. Under these conditions, it is sometimes necessary to provide high pressure lubrication where there are problems with fluid flow or fluid viscosity. Alternatively, in other parts of a machine assembly high pressure lubrication could have negative effects such as ablation of surfaces, and low pressure lubrication, sometimes using lubricants of different rheology and viscosity, is necessary.

## Claims

1. A device for uniformly providing lubricant to machine parts comprising:
an axially mounted rotating circumferential lubricant reservoir, the lubricant reservoir having an axis of rotation and supplying lubricant to a machine part to be lubricated; and
an axially mounted rotating circumferential weir that comprises one side of the reservoir for causing the lubricant to flow uniformly over the top of the weir around the circumference of the top of the weir.

2. The device of claim 1 wherein the lubricant is supplied from the top of a weir that spans less than a 360° circular arc about the axis of rotation.

3. The device of claim 1 or 2 further comprising at least one conduit in tribological communication with the weir for directing lubricant away from the weir wherein the amount of lubricant passing over the weir is controlled by the amount of lubricant that enters the reservoir.

4. The device of claim 1 or 2 wherein a plurality of reservoirs and a plurality of weirs are used to provide lubricant to machine parts.

5. The device of claim 1 or 2 wherein lubricant flowing over the weir is used to cool machine parts.

6. A device for lubricating axially mounted rotating aircraft engine parts when rotating comprising:
a circumferential lubricant reservoir for supplying lubricant to the parts to be lubricated having a first side and a second side, the first side having a deeper wall height than the second side, and a top side disposed closer to the axis of rotation than a bottom side that is disposed further from the axis of rotation, the top side substantially open and the bottom side closed to allow the reservoir to retain a lubricant when rotating;
a circumferential weir that comprises the second side of the reservoir to allow lubricant supplied to the reservoir to flow uniformly over the top of the weir around the circumference of the weir when rotating without the lubricant escaping through the first side and that can span less than a 360° circular arc about the axis of rotation; and
grooves parallel to the axis of rotation that direct lubricant away from the weir for moving the lubricant to lubricating ports in tribological communication with the surfaces to be lubricated.

7. The device of claim 6 wherein a plurality of reservoirs and a plurality of weirs are used to provide lubricant to aircraft engine parts that can include bearings.

8. A method for making a device that uses axially mounted rotating parts for uniformly providing lubricant around the circumference of the device to machine parts comprising:
providing an axial bore for axially mounting the device;
machining a circumferential lubricant reservoir for providing lubricant to the parts;
machining a circumferential weir as one side of the lubricant reservoir for delivering the lubricant from the reservoir directly to the weir and for uniformly delivering lubricant around the circumferential arc of the weir to the parts;
holding the radial tolerance of the weir at its top to less than ± 0.001 inch (± 0.025 mm) variance in distance from the axis of rotation around its circumferential arc;
machining grooves parallel to the axis of rotation for directing lubricant away from the weir to the parts; and
machining ports leading from the grooves to a surface to be lubricated for delivering lubricant to the surface to be lubricated.

9. The method of claim 8 further comprising providing lubricant delivered over the top of the weir to machine parts for cooling machine parts.

10. A method for lubricating, to reduce friction or cool, axially mounted rotating aircraft engine parts when rotating comprising the steps of:
storing lubricant in at least one circumferential lubricant reservoir;
filling the reservoir until the lubricant passes over the top of a circumferential weir that comprises one side of the lubricant reservoir;
distributing the lubricant uniformly over the top of the circumferential weir.
using grooves that are parallel to the axis of rotation to direct lubricant away from the weir for moving the lubricant to lubricating ports that are in tribological communication with the surfaces to be lubricated;
regulating the amount of lubricant delivered to each lubricating port by controlling the amount of lubricant passing over the weir; and
regulating the amount of lubricant passing over the weir by controlling the amount of lubricant that enters the reservoir.
